# EUROPÄISCHE PATENTSCHRIFT

(11) **EP 2 233 365 B1**
(45) Veröffentlichungstag und Bekanntmachung des Hinweises auf die Patenterteilung: **28.03.2018**
(21) Anmeldenummer: 10151545.0
(22) Anmeldetag: 25.01.2010
(51) Int. Cl.: B60R 11/04, G06T 7/73

(54) **Verfahren sowie Vorrichtung zum Bestimmen der Position und Ausrichtung einer Fahrerassistenzsystem-Kamera eines Fahrzeugs zu dem Fahrzeug**
Method and device for determining the position and alignment of a driver assistance camera of a vehicle to the vehicle
Procédé et dispositif destinés à la détermination de la position et de l'orientation d'une caméra de système d'assistance du conducteur d'un véhicule par rapport au véhicule

(30) Priorität: 23.03.2009 DE 102009001742
(43) Veröffentlichungstag der Anmeldung: 29.09.2010
(73) Patentinhaber: Robert Bosch GmbH, 70442 Stuttgart (DE)
(72) Erfinder: Pavlov, Pavel, 80803 Muenchen (DE); Kaefer, Stefan Markus, 85609 Aschheim (DE)

(56) Entgegenhaltungen:
- WO-A1-2006/040217
- US-A1- 2004 133 376
- ERNST S ET AL: "Camera calibration for lane and obstacle detection", INTELLIGENT TRANSPORTATION SYSTEMS, 1999. PROCEEDINGS. 1999 IEEE/IEEJ/ JSAI INTERNATIONAL CONFERENCE ON TOKYO, JAPAN 5-8 OCT. 1999, PISCATAWAY, NJ, USA,IEEE, US, 5. Oktober 1999 (1999-10-05), Seiten 356-361, XP010369932, DOI: 10.1109/ITSC.1999.821081 ISBN: 978-0-7803-4975-9

## Beschreibung

Die Erfindung betrifft ein Verfahren sowie eine Vorrichtung zum Bestimmen der Position und Ausrichtung einer Fahrerassistenzsystem-Kamera eines Fahrzeugs zu dem Fahrzeug selbst.

### Stand der Technik

Moderne Kraftfahrzeuge verfügen häufig über Fahrerassistenzsysteme, beispielsweise über einen Spurhalteassistenten, eine Spurwechselwarnung (lane change warning), über eine Spurverlassenswarnung (lane departure warning), über eine Wärmebildkamera (night vision) oder über eine Einparkhilfe.

Insbesondere bei Kamera-basierten Fahrerassistenzsystemen ist es erforderlich, dass die Fahrerassistenzsystem-Kameras ein präzises, mit der Realität übereinstimmendes und korrekt auf das Fahrzeug ausgerichtetes Bild der Umgebung liefern. Hierfür müssen die Fahrerassistenzsystem-Kameras kalibriert werden. Das Dokument US2004/0133376 A1 beschreibt ein solches Kalibrierverfahren. Die Veröffentlichung ERNST S ET AL: "Camera calibration for lane and obstacle detection",INTELLIGENT TRANSPORTATION SYSTEMS, 1999. PROCEEDINGS. 1999 IEEE/IEEJ/ JSAI INTERNATIONAL CONFERENCE ON TOKYO, JAPAN 5-8 OCT. 1999, PISCATAWAY, NJ, USA,IEEE, 5. Oktober 1999, Seiten 356-361, XP010369932, ISBN: 978-0-7803-4975-9 beschreibt die mathematischen Grundlagen derartiger Kalibrierverfahren. Ein solcher Kalibrierungsvorgang und insbesondere die vorbereitenden Schritte hierfür sind in der Praxis häufig sehr aufwändig. Insbesondere bereitet es häufig Probleme, die Positionierung und Ausrichtung der Fahrerassistenzsystem-Kamera zu dem Fahrzeug selbst zu ermitteln.

### Offenbarung der Erfindung

Es ist daher Aufgabe der vorliegenden Erfindung ein Verfahren sowie eine Vorrichtung anzugeben, mit denen die Kalibrierung von Fahrerassistenzsystem-Kameras vereinfacht wird.

Diese Aufgabe wird durch den Gegenstand der unabhängigen Patentansprüche gelöst. Vorteilhafte Weiterbildungen ergeben sich aus den abhängigen Ansprüchen.

Bei einem erfindungsgemäßen Verfahren zum Bestimmen der Position und Ausrichtung einer Fahrerassistenzsystem-Kamera eines Fahrzeugs zu dem Fahrzeug werden zunächst wenigstens eine Marke eines an dem linken Rad der ungelenkten Hinterachse angebrachten Messtargets und wenigstens einer Marke eines an dem gegenüberliegenden rechten Rad der ungelenkten Hinterachse angebrachten Messtargets durch zwei Messkameras aufgenommen, und zwar wenigstens in zwei voneinander verschiedenen Fahrzeugpositionen. Daraus wird die Richtung der geometrischen Fahrachse und deren Position mittig zur Achse bezüglich der zwei Messkameras bestimmt. Durch Aufnahmen der Messtargets in mehr als zwei Fahrzeugpositionen kann die Genauigkeit der bestimmten geometrischen Fahrachse erhöht werden. Dann wird ein beabstandet von dem Fahrzeug angeordnetes Fahrerassistenzsystem-Kalibriertarget mit den zwei Messkameras aufgenommen, und daraus wird die Position des Fahrerassistenzsystem-Kalibriertargets zu den Messkameras bestimmt. Durch Kenntnis der geometrischen Fahrachse zu den Messkameras und durch Kenntnis der Position des Fahrerassistenzsystem-Kalibriertargets zu den Messkameras kann die Position und Ausrichtung des Fahrerassistenzsystem-Kalibriertargets zu der geometrischen Fahrachse des Fahrzeugs aufgrund der durch die Messkameras gebildeten gemeinsamen Referenz berechnet werden. Nun wird durch die Fahrerassistenzsystem-Kamera dasselbe Fahrerassistenzsystem-Kalibriertarget in derselben Position aufgenommen, und daraus wird die Position der Fahrerassistenzsystem-Kamera zu dem Fahrerassistenzsystem-Kalibriertarget bestimmt. Nun ist die Position des Fahrerassistenzsystem-Kalibriertargets sowohl zu den beiden Messkameras als auch zu der Fahrerassistenzsystem-Kamera bekannt, und zusätzlich ist die geometrischen Fahrachse in Bezug auf die Messkameras bekannt. Daher kann nun die Position und die Ausrichtung der Fahrerassistenzsystem-Kamera bezüglich der geometrischen Fahrachse aufgrund der durch die Messkameras gebildeten gemeinsamen Referenz bestimmt werden.

Bei einer erfindungsgemäßen Vorrichtung zum Bestimmen der Position und Ausrichtung einer Fahrerassistenzsystem-Kamera eines Fahrzeugs zu dem Fahrzeug selbst sind ein beabstandet von dem Fahrzeug angeordnetes Kalibriertarget für die Fahrerassistenzsystem-Kamera, ein an einem linken Rad der ungelenkten Hinterachse angebrachtes linkes Messtarget mit wenigstens einer Marke und ein an dem gegenüberliegenden rechten Rad der ungelenkten Hinterachse angebrachtes rechtes Messtarget mit wenigstens einer Marke, zwei Messkameras zur Aufnahme des Fahrerassistenzsystem-Kalibriertargets und zur Aufnahme wenigstens einer Marke des linken Messtargets und wenigstens einer Marke des rechten Messtargets in mehreren Fahrzeugpositionen sowie eine Auswerteeinheit vorgesehen. Die Auswerteeinheit bestimmt aus den Aufnahmen der Messtargets in wenigstens zwei Fahrzeugpositionen die Richtung der geometrischen Fahrachse und deren Position mittig zur Achse bezüglich den zwei Messkameras. Durch Aufnahmen der Messtargets in mehr als zwei Fahrzeugpositionen kann die Genauigkeit der bestimmten geometrischen Fahrachse erhöht werden. Die Auswerteeinheit bestimmt weiterhin aus den Aufnahmen des Fahrerassistenzsystem-Kalibriertargets durch die zwei Messkameras die Position des Fahrerassistenzsystem-Kalibriertargets zu den Messkameras, sie bestimmt daraus die Position und Ausrichtung des Fahrerassistenzsystem-Kalibriertargets zu der geometrischen Fahrachse des Fahrzeugs, sie bestimmt aus der Aufnahme des Fahrerassistenzsystem-Kalibriertargets durch die Fahrerassistenzsystem-Kamera die Position des Fahrerassistenzsystem-Kalibriertargets zu der Fahrerassistenzsystem-Kamera und sie bestimmt schließlich daraus die Position und Ausrichtung der Fahrerassistenzsystem-Kamera bezüglich der geometrischen Fahrachse.

Gemäß einer der vorliegenden Erfindung zugrunde liegenden Erkenntnis ist die Fahrerassistenzsystem-Kamera in der Lage, die Position des Fahrerassistenzsystem-Kalibriertargets zu sich selbst zu bestimmen, nicht aber ihre Position selbst bezüglich des Fahrzeugs. Um eine Kalibrierung der Fahrerassistenzsystem-Kameras durchführen zu können, fehlt in der Praxis zumeist die Kenntnis der Position und Ausrichtung der Fahrerassistenzsystem-Kamera bezüglich der Fahrzeuggeometrie selbst. Die Position und Ausrichtung der Fahrerassistenzsystem-Kamera bezüglich der Fahrzeuggeometrie weicht nämlich häufig von den geforderten Sollwerten ab, was eine Kalibrierung erforderlich macht. Diese Problematik wird durch die vorliegende Erfindung behoben, die Position und Ausrichtung der Fahrerassistenzsystem-Kamera zu dem Fahrzeug selbst kann schnell und präzise bestimmt werden. Erfindungsgemäß wird daher eine Kalibrierung von Fahrerassistenzsystemen beschleunigt und erleichtert oder überhaupt erst ermöglicht.

Erfindungsgemäß wird also ein zusätzliches, geeignetes Target, das hier als Fahrerassistenzsystem-Kalibriertarget bezeichnet wird, verwendet, und durch die Messkameras werden die Position und Ausrichtung dieses Targets in Bezug auf die geometrische Fahrachse bestimmt. Diese Information kann mit der von der Fahrerassistenzsystem-Kamera ermittelten Information über die Position und Ausrichtung der Fahrerassistenzsystem-Kamera zu dem Fahrerassistenzsystem-Kalibriertarget verknüpft werden, und daraus kann schließlich die Position und Ausrichtung der Fahrerassistenzsystem-Kamera bezüglich der geometrischen Fahrachse ermittelt werden. Die Verknüpfung der Information geometrische Fahrachse zu den beiden Messkameras mit der Information Fahrerassistenzsystem-Kalibriertarget zu den beiden Messkameras liefert dann die Information Fahrerassistenzsystem-Kalibriertarget zu der geometrischen Fahrachse.

Mit anderen Worten wird also ermittelt, wie das Koordinatensystem der Fahrerassistenzsystem-Kamera, in dem dieses rechnet, in Position und Ausrichtung zur geometrischen Fahrachse gelegen ist.

Die Berechnungsschritte der Auswerteeinheit können auch verteilt ausgeführt werden, beispielsweise kann die Bestimmung der Position des Fahrerassistenzsystem-Kalibriertargets zu der Fahrerassistenzsystem-Kamera in einer Auswerteeinheit des Fahrerassistenzsystems erfolgen, und nur das Ergebnis der weiteren Auswerteeinheit kann zur Verfügung gestellt werden.

Bei den Rädern, an denen die Messtargets angebracht sind, handelt es sich um die Hinterräder, zumal die geometrische Fahrachse durch die Hinterräder und die Hinterachse festgelegt wird.

Erfindungsgemäß ist es erforderlich, dass das Fahrerassistenzsystem-Kalibriertarget in den Sichtfeldern der Fahrerassistenzsystem-Kamera und der beiden Messkameras liegt. Bei einer nach vorne gerichteten Fahrerassistenzsystem-Kamera, die beispielsweise über dem Innenspiegel des Fahrzeugs angeordnet ist, ist das Fahrerassistenzsystem-Kalibriertarget vor dem Fahrzeug anzuordnen. Bei an oder in dem Außenspiegel oder dem Türholm angeordneten, schräg nach unten gerichteten Fahrerassistenzsystem-Kameras ist das Fahrerassistenzsystem-Kalibriertarget neben dem Kraftfahrzeug anzuordnen. Bei einer im Heck des Kraftfahrzeugs angeordneten, nach hinten gerichteten Fahrerassistenzsystem-Kamera ist das Fahrerassistenzsystem-Kalibriertarget hinter dem Fahrzeug anzuordnen. Diese Fahrerassistenzsystem-Kamera-Anordnungen sind nur exemplarisch aufgeführt, andere Fahrerassistenzsystem-Kamera-Anordnungen sind selbstverständlich von der vorliegenden Erfindung ebenfalls umfasst.

Die nachfolgend beschriebenen Ausführungsformen der Erfindung können sowohl in verfahrens- als auch in vorrichtungsmäßiger Ausgestaltung zum Einsatz kommen.

Gemäß einer ersten Ausführungsform der Erfindung wird durch die Aufnahme der Marken an den Messtargets in den wenigstens zwei Fahrzeugpositionen die Neigung der Aufstandsfläche zu den Messkameras bestimmt. Bei Kenntnis der Position der Messkameras kann daraus die Neigung der Aufstandsfläche in Fahrzeuglängsrichtung und/oder in Fahrzeugquerrichtung bestimmt werden. Alternativ dazu können die Neigung der Aufstandsfläche in Fahrzeuglängsrichtung durch Aufnahme wenigstens einer Marke auf der Karosserie und die Neigung der Aufstandsfläche in Fahrzeugquerrichtung durch Aufnahme einer Bezugsanordnung, beispielsweise eines Balkens auf dem Boden mit wenigstens zwei Marken, bestimmt werden. Dadurch erhält man noch genauere Werte bezüglich der Position und Ausrichtung der Fahrerassistenzsystem-Kamera bezüglich der geometrischen Fahrachse.

Gemäß einer weiteren Ausführungsform der Erfindung weist das Fahrerassistenzsystem-Kalibriertarget eine bekannte Merkmalsanordnung für die Fahrerassistenzsystem-Kamera auf. Dies ist erforderlich, weil es sich bei der Fahrerassistenzsystem-Kamera zumeist um eine Monokamera handelt. Für die Beobachtung durch die zwei Messkameras reicht es aus, wenn eine nicht vorbestimmte und nicht vorbekannte Anordnung von Marken auf dem Fahrerassistenzsystem-Kalibriertarget vorhanden ist. Demnach ist es denkbar, dass das Fahrerassistenzsystem-Kalibriertarget eine erste bekannte Markenanordnung für die Fahrerassistenzsystem-Kamera und eine zweite unbekannte Markenanordnung für die Messkameras hat.

Gemäß einer weiteren Ausführungsform der Erfindung wird zusätzlich eine Anzeigevorrichtung vorgesehen, welche die Ist-Position und ggf. auch die Soll-Position des Fahrerassistenzsystem-Kalibriertargets anzeigt, um so die Positionierung des Fahrerassistenzsystem-Kalibriertargets in die Soll-Position zu erleichtern. Häufig ist das Fahrerassistenzsystem mit einer eigenen Kalibriersoftware ausgestattet, die voraussetzt, dass sich das Fahrerassistenzsystem-Kalibriertarget in einer definierten Position zum Fahrzeug befindet. Ohne die vorliegende Erfindung ist die Positionierung des Fahrerassistenzsystem-Kalibriertargets in diese definierte Position ein aufwändiger iterativer Prozess. Durch diese Ausführungsform der Erfindung wird die Positionierung des Fahrerassistenzsystem-Kalibriertargets in die definierte Position signifikant vereinfacht oder überhaupt erst ermöglicht.

Gemäß einer weiteren Ausführungsform der Erfindung handelt es sich bei der Fahrerassistenzsystem-Kamera um eine Fahrerassistenzsystem-Kamera eines Spurhalteassistenten, einer Spurwechselwarnung, einer Spurverlassenswarnung, einer Wärmebildkamera oder einer Einparkhilfe. Diese Aufzählung ist nur exemplarisch und nicht abschließend, selbstverständlich sind von der vorliegenden Erfindung auch andere Fahrerassistenzsystem-Kameras umfasst.

Gemäß einer weiteren Ausführungsform der Erfindung umfassen die Messtargets ein in Fahrzeugquerrichtung nach außen ragendes Targetelement mit wenigstens einer daran angebrachten Marke, die derart ausgebildet ist, dass sich bei einer Drehung des Messtargets stets mindestens eine Marke im Blickfeld der Messkameras befindet. Dadurch kann eine Aufnahme dieser Marken und das Bestimmen der geometrischen Fahrachse des Fahrzeugs daraus in jeder Winkelposition des Rads erfolgen, was besonders komfortabel ist.

Gemäß einer weiteren Ausführungsform der Erfindung ist zusätzlich ein Referenztarget und/oder eine Winkelmesseinrichtung für die Messkameras vorgesehen, um deren Ausrichtung bezüglich der Richtung der Erdanziehungskraft bestimmen zu können. Als Referenztarget kann dabei beispielsweise eine Bezugsanordnung, insbesondere ein Balken mit mindestens zwei Marken verwendet werden, die in einem bekannten Winkel zur Richtung der Erdanziehungskraft ausgerichtet ist.

In einer vorteilhaften Weiterbildung der Erfindung kann das Fahrerassistenzsystem-Kalibriertarget, wenn seine Merkmalsanordnung in einem bekannten Winkel bezüglich der Richtung der Erdanziehungskraft ausgerichtet ist, selbst als solches Referenztarget verwendet werden.

Gemäß einem weiteren Gedanken der Erfindung können gewöhnliche Kalibriereinrichtungen, wie sie beispielsweise für Radar-, Lidar-, Ultraschallsensoren und dergleichen zum Einsatz kommen, oder Einstellhilfen für Scheinwerfer mit Messmarken versehen bzw. nachgerüstet werden, um deren Position und Ausrichtung durch Beobachten mit den Messkameras ermitteln zu können.

Es ergibt sich in einer Weiterbildung der Erfindung auch die Möglichkeit der Bestimmung der Position und Ausrichtung oder Positionierung weiterer Kalibrier- oder Einstellhilfen beispielsweise Radar-, Lidar- oder Ultraschallsensoren oder beispielsweise von Scheinwerfereinstellgeräten in Bezug auf die Fahrzeuggeometrie.

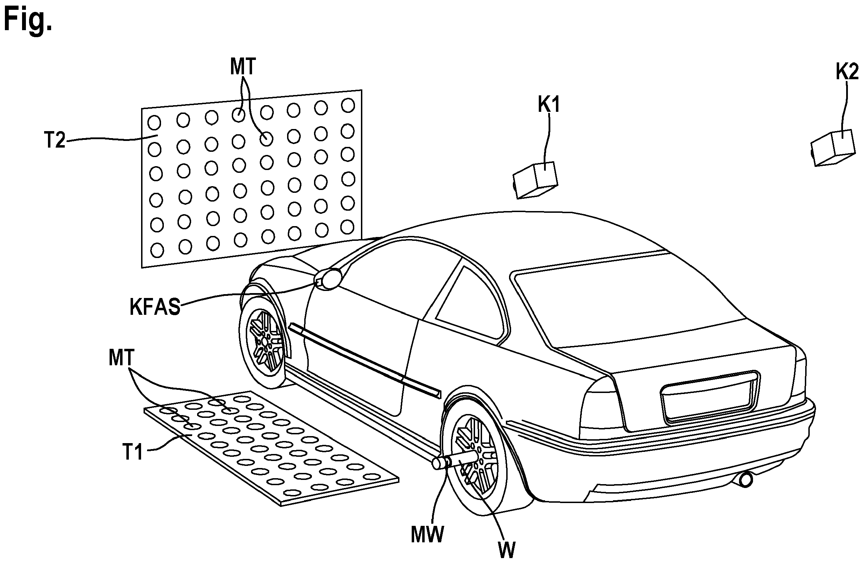

Die Erfindung ist nachfolgend anhand eines Ausführungsbeispiels mit Bezug auf die beiliegende Figur näher erläutert.

Die Figur zeigt, gemäß einem exemplarischen Ausführungsbeispiel der vorliegenden Erfindung, eine perspektivische Ansicht einer Vorrichtung zum Bestimmen der Position und Ausrichtung einer Fahrerassistenzsystem-Kamera eines Fahrzeugs zu dem Fahrzeug selbst.

In der Figur ist ein Fahrzeug, dessen Fahrerassistenzsystem-Kamera kalibriert werden soll, schräg von hinten dargestellt. An seinem linken Hinterrad ist ein wellenförmiges Messtarget W befestigt, beispielsweise mittels eines in der Figur nicht gezeigten Magnethalters an den Radbolzen. Alternativ dazu kann die Befestigung des wellenförmigen Messtargets W auch mittels eines aus der Achsvermessung bekannten Schnellspannhalters verwirklicht werden.

In der Figur bildet das wellenförmige Target W eine Verlängerung der Drehachse des linken Hinterrads, was aber optional ist. Das wellenförmige Messtarget W kann sich auch in einem radialen Abstand zur Raddrehachse erstrecken.

Das wellenförmige Messtarget W ragt ein Stück weit in Fahrzeugquerrichtung nach außen und hat in seinem äußeren Bereich eine ringförmige Messmarke MW, die rotationssymmetrisch an dem wellenförmigen Messtarget W angebracht ist, so dass diese ringförmige Messmarke MW während einer Drehung des wellenförmigen Messtargets W infolge einer Fahrzeugbewegung, insbesondere bei der Anfahrt des Fahrzeugs, immer für die nachfolgend erläuterten Messkameras K1 und K2 sichtbar bleibt.

Alternativ zu der ringförmigen Ausbildung der Messmarke MW ist es auch denkbar, mehrere diskrete Messmarken über den Umfang des wellenförmigen Messtargets W zu verteilen.

Alternativ zu der hier dargestellten vorteilhaften wellenförmigen Ausbildung des Messtargets W können auch gewöhnliche Targets an den Rädern befestigt werden, diese können dann gegebenenfalls nur in bestimmten Radstellungswinkelbereichen von den Messkameras K1 und K2 beobachtet werden.

An dem rechten Hinterrad ist ebenfalls ein wellenförmiges, hier von dem Heck des Kraftfahrzeugs verdecktes Messtarget W befestigt.

In dem linken Außenspiegel des Fahrzeugs ist eine Fahrerassistenzsystem-Kamera KFAS integriert, die beispielsweise Element eines Spurhalteassistenten ist. Diese ist schräg nach unten gerichtet, so dass das nachfolgend erläuterte erste Fahrerassistenzsystem-Kalibriertarget T1 in ihrem Blickfeld liegt.

An dem inneren Rückspiegel des Fahrzeugs ist eine weitere, hier nicht erkennbare, nach vorne gerichtete Fahrerassistenzsystem-Kamera angeordnet, deren Blickfeld derart bemessen ist, dass das in der Figur aufrecht vor dem Fahrzeug angeordnete Fahrerassistenzsystem-Kalibriertarget T2 vollständig darin liegt.

Das neben dem Fahrzeug waagerecht auf dem Boden liegende erste Fahrerassistenzsystem-Kalibriertarget T1 sowie das zweite Fahrerassistenzsystem-Kalibriertarget T2 verfügen über eine Anordnung von Messmarken MT, deren Form und Anordnung zueinander bekannt ist.

Oberhalb des hinteren Bereich des Fahrzeugs sind zwei Messkameras K1 und K2 vorhanden, deren Blickfelder so bemessen oder einstellbar sind, dass zum einen die ringförmigen Messmarken MW auf beiden Fahrzeugseiten während einer Anfahrbewegung des Fahrzeugs vollständig darin liegen und zum anderen, falls die Fahrerassistenzsystem-Kamera KFAS im Rückspiegel kalibriert werden soll, das erste Fahrerassistenzsystem-Kalibriertarget vollständig darin liegt oder, falls die Fahrerassistenzsystem-Kamera im Innenspiegel kalibriert werden soll, das Fahrerassistenzsystem-Kalibriertarget T2 vollständig darin liegt.

In einem alternativen Ausführungsbeispiel ist es denkbar, die Messkameras K1 und K2 schwenkbar zu gestalten, um das Fahrzeug und das Fahrerassistenzsystem-Kalibriertarget nacheinander zu vermessen, falls diese nicht gleichzeitig im Blickfeld liegen können. Die Verschwenkung der Messkameras K1 und K2 muss dann allerdings bekannt sein oder gemessen werden!

Des weiteren verfügt die Kalibriervorrichtung noch über eine in der Figur nicht gezeigte Auswerteeinheit, welche die nachfolgenden Berechnungen durchführt und entsprechende Ergebnisse ausgibt oder anzeigt.

Nachfolgend ist das Bestimmen der Position und Ausrichtung der in dem Außenspiegel angeordneten Fahrerassistenzsystem-Kamera KFAS zu dem Fahrzeug beschrieben, für die im Innenspiegel des Fahrzeugs angeordnete Fahrerassistenzsystem-Kamera erfolgt dies analog.

Die ringförmigen Messmarken MW werden während der Anfahrt des Fahrzeugs mittels den Messkameras K1 und K2 beobachtet, und daraus wird die Richtung der geometrischen Fahrachse und deren Position als Mitte der Hinterachse bezüglich den Messkameras K1 und K2 berechnet. Dabei wird vorausgesetzt, dass die beiden ringförmigen Messmarken MW baugleich sind und symmetrisch an den Hinterrädern des Fahrzeugs angebracht sind.

Durch die Beobachtung der ringförmigen Messmarken kann zudem die Neigung der Aufstandsfläche bezüglich der Messkameras K1 und K2 bestimmt werden.

Danach wird zu einem übereinstimmenden Zeitpunkt während der Bewegung des Fahrzeugs oder bei Stillstand des Fahrzeugs die Merkmalsanordnung MT auf dem ersten Fahrerassistenzsystem-Kalibriertarget T1 aufgenommen, und zwar zum einen durch die beiden Messkameras K1 und K2 und zum anderen durch die Fahrerassistenzsystem-Kamera KFAS. Durch die Messkamera-Aufnahmen des Fahrerassistenzsystem-Kalibriertargets T1 und dessen Merkmalsanordnung MT kann dessen Position und Ausrichtung bezüglich der geometrischen Fahrachse bestimmt werden. Durch die Fahrerassistenzsystem-Kamera-Aufnahme des Fahrerassistenzsystem-Kalibriertargets T1 und dessen Messmarkenanordnung MT wird die Position und Ausrichtung des Fahrerassistenzsystem-Kalibriertargets T1 bezüglich der Fahrerassistenzsystem-Kamera KFAS bestimmt.

Die so gewonnenen Daten der geometrischen Fahrachse und die Positions- und Ausrichtungsdaten des Fahrerassistenzsystem-Kalibriertargets stehen durch die gemeinsam beobachtenden Messkameras K1 und K2, die auch als Stereokamera-Anordnung bezeichnet werden können, in einem festen, genau bekannten Bezug zueinander, und somit kann daraus nun die Position und Ausrichtung der Fahrerassistenzsystem-Kamera KFAS bezüglich der geometrischen Fahrachse bestimmt werden.

Da die Position des Fahrerassistenzsystem-Kalibriertargets sowohl zu den zwei Messkameras als auch zu der Fahrerassistenzsystem-Kamera bekannt ist, und da die geometrischen Fahrachse des Fahrzeugs zu den Messkameras ebenfalls bekannt ist, kann nun die Position und Ausrichtung der Fahrerassistenzsystem-Kamera bezüglich der geometrischen Fahrachse des Fahrzeugs bestimmt werden.

Die Kenntnis der Position und Ausrichtung der Fahrerassistenzsystem-Kamera bezüglich der geometrischen Fahrachse ist für die nachfolgende Kalibrierung des Fahrerassistenzsystems, die häufig durch eine Fahrerassistenzsystem-interne Software erfolgt, erforderlich.

Wenn die Auswerteeinheit über eine Anzeige verfügt, ist es möglich, das Fahrerassistenzsystem-Kalibriertarget T1 in seiner jeweils aktuellen Positionierung bezüglich der geometrischen Fahrachse darzustellen, um so die Positionierung des Fahrerassistenzsystem-Kalibriertargets T1 in die von dem Fahrerassistenzsystem für die Kalibrierung vorgegebene Soll-Position zu erleichtern.

Des weiteren wird, da nun die Positionierung und Ausrichtung der Fahrerassistenzsystem-Kamera KFAS zu der geometrischen Fahrachse genau bekannt ist, sichergestellt, dass die Fahrerassistenzsystem-Kamera KFAS nach dem Kalibriervorgang optimal ausgerichtet und eingestellt ist.

## Patentansprüche

1. Verfahren zum Bestimmen der Position und Ausrichtung einer Fahrerassistenzsystem-Kamera (KFAS) eines Fahrzeugs zu dem Fahrzeug, aufweisend die folgenden aufeinanderfolgenden Schritte:
Aufnehmen wenigstens einer Marke (MW) eines an dem linken Rad der Hinterachse angebrachten Messtargets (W) und wenigstens einer Marke eines an dem gegenüberliegenden rechten Rad der Hinterachse angebrachten Messtargets durch zwei Messkameras (K1, K2), welche sich oberhalb vom Fahrzeug befinden, in wenigstens zwei Fahrzeugpositionen;
Bestimmen der Richtung der geometrischen Fahrachse des Fahrzeugs und deren Position mittig zur Achse bezüglich den zwei Messkameras (K1, K2), und bestimmen einer Neigung einer Aufstandsfläche zu den Messkameras (K2, K2) daraus;
Aufnehmen eines Fahrerassistenzsystem-Kalibriertargets (T1, T2) mit den zwei Messkameras (K1, K2);
Bestimmen der Position des Fahrerassistenzsystem-Kalibriertargets (T1, T2) zu den zwei Messkameras (K1, K2) daraus;
Bestimmen der Position und Ausrichtung des Fahrerassistenzsystem-Kalibriertargets (T1, T2) zu der geometrischen Fahrachse des Fahrzeugs;
Aufnehmen des Fahrerassistenzsystem-Kalibriertargets (T1, T2) durch die Fahrerassistenzsystem-Kamera (KFAS);
Bestimmen der Position der Fahrerassistenzsystem-Kamera (KFAS) zu dem Fahrerassistenzsystem-Kalibriertarget (T1, T2) daraus; und
Bestimmen der Position und Ausrichtung der Fahrerassistenzsystem-Kamera (KFAS) bezüglich der geometrischen Fahrachse des Fahrzeugs.

2. Verfahren nach Anspruch 1 , wobei die Marken (MW) der Messtargets (W) an den Rädern von den Messkameras (K1, K2) während einer Fahrbewegung des Fahrzeugs, insbesondere während der Anfahrt des Fahrzeuges aufgenommen werden.

3. Verfahren nach einem der vorangehenden Ansprüche, wobei das Fahrerassistenzsystem-Kalibriertarget (T1, T2) eine bekannte Merkmalsanordnung aufweist.

4. Verfahren nach einem der vorangehenden Ansprüche, wobei zusätzlich eine Anzeigevorrichtung vorgesehen ist, welche die Istposition sowie die Sollposition des Fahrerassistenzsystem-Kalibriertargets (T1, T2) anzeigt, um so die Positionierung des Fahrerassistenzsystem-Kalibriertargets (T1, T2) in die Sollposition zu erleichtern.

5. Vorrichtung zum Bestimmen der Position und Ausrichtung einer Fahrerassistenzsystem-Kamera (KFAS) eines Fahrzeugs zu dem Fahrzeug, aufweisend:
ein beabstandet von dem Fahrzeug angeordnetes Kalibriertarget (T1, T2) für die Fahrerassistenzsystem-Kamera (KFAS);
ein an einem linken Rad der Hinterachse angebrachtes linkes Messtarget (W) mit wenigstens einer Marke (MW) und ein an dem gegenüberliegenden rechten Rad der Hinterachse angebrachtes rechtes Messtarget mit wenigstens einer Marke;
zwei Messkameras (K1, K2), welche sich oberhalb vom Fahrzeug befinden und die angeordnet und eingerichtet sind, um das Fahrerassistenzsystem-Kalibriertarget (T1, T2) aufzunehmen und um wenigstens eine Marke (MW) des linken Messtargets (W) und wenigstens eine Marke des rechten Messtargets in mehreren Fahrzeugpositionen aufzunehmen; und
eine Auswerteeinheit, die eingerichtet ist,
aus den Aufnahmen der Messtargets (MW) in wenigstens zwei Fahrzeugpositionen die Richtung der geometrische Fahrachse des Fahrzeugs und deren Position mittig zur Achse bezüglich den zwei Messkameras (K1, K2) und die Neigung einer Aufstandsfläche zu den Messkameras (K2, K2) zu bestimmen;
aus den Aufnahmen des Fahrerassistenzsystem-Kalibriertargets (T1, T2) durch die zwei Messkameras (K1, K2) die Position des Fahrerassistenzsystem-Kalibriertargets (T1, T2) zu den zwei Messkameras (K1, K2) zu bestimmen;
daraus die Position und Ausrichtung des Fahrerassistenzsystem-Kalibriertargets (T1, T2) zu der geometrischen Fahrachse des Fahrzeugs zu bestimmen;
aus der Aufnahme des Fahrerassistenzsystems-Kalibriertargets (T1, T2) durch die Fahrerassistenzsystem-Kamera (KFAS) die Position des Fahrerassistenzsystem-Kalibriertargets (T1, T2) zu der Fahrerassistenzsystem-Kamera (KFAS) zu bestimmen; und
um daraus die Position und Ausrichtung der Fahrerassistenzsystem-Kamera (KFAS) bezüglich der geometrischen Fahrachse des Fahrzeugs zu bestimmen.

6. Vorrichtung nach Anspruch 5, wobei es sich bei der Fahrerassistenzsystemkamera (KFAS) um eine Fahrerassistenzsystemkamera eines Spurhalteassistenten, einer Spurwechselwarnung/lane change warning, Spurverlassenswarnung/lane departure warning, einer Wärmebildkamera/night vision oder einer Einparkhilfe handelt.

7. Vorrichtung nach Anspruch 5 oder 6, wobei die Messtargets (W) ein in Fahrzeugquerrichtung nach außen ragendes Targetelement mit wenigstens einer daran angebrachten Marke (MW) umfassen, die derart ausgebildet ist/sind, dass sich bei einer Drehung des Messtargets (W) stets mindestens eine Marke (MW) im Blickfeld der Messkameras (K1, K2) befindet.

8. Vorrichtung nach einem der Ansprüche 5 bis 7, wobei zusätzlich ein Referenztarget und/oder eine Winkelmesseinrichtung für die Messkameras vorgesehen ist.

## Claims

1. Method for determining the position and alignment of a driver assistance system camera (KFAS) of a vehicle in relation to the vehicle, including the following successive steps:
recording at least one marking (MW) of a measurement target (W) applied to the left wheel of the rear axle and at least one marking of a measurement target attached to the opposite right wheel of the rear axle by way of two measurement cameras (K1, K2) situated above the vehicle in at least two vehicle positions;
determining the direction of the geometric drive axis of the vehicle and the position thereof centrally in relation to the axis with respect to the two measurement cameras (K1, K2) and determining an inclination of a contact area in relation to the measurement cameras (K2, K2) therefrom;
recording a driver assistance system calibration target (T1, T2) using the two measurement cameras (K1, K2);
determining the position of the driver assistance system calibration target (T1, T2) in relation to the two measurement cameras (K1, K2) therefrom;
determining the position and alignment of the driver assistance system calibration target (T1, T2) in relation to the geometric drive axis of the vehicle;
recording the driver assistance system calibration target (T1, T2) by way of the driver assistance system camera (KFAS);
determining the position of the driver assistance system camera (KFAS) in relation to the driver assistance system calibration target (T1, T2) therefrom; and
determining the position and alignment of the driver assistance system camera (KFAS) in relation to the geometric drive axis of the vehicle.

2. Method according to Claim 1, wherein the markings (MW) of the measurement targets (W) are recorded at the wheels by the measurement cameras (K1, K2) during a driving movement of the vehicle, in particular during the launch of the vehicle.

3. Method according to either of the preceding claims, wherein the driver assistance system calibration target (T1, T2) has a known feature arrangement.

4. Method according to any one of the preceding claims, wherein provision is additionally made of an indication apparatus which indicates the actual position and the intended position of the driver assistance system calibration target (T1, T2) in order thus to simplify the positioning of the driver assistance system calibration target (T1, T2) in the intended position.

5. Apparatus for determining the position and alignment of a driver assistance system camera (KFAS) of a vehicle in relation to the vehicle, having:
a calibration target (T1, T2) for the driver assistance system camera (KFAS), arranged at a distance from the vehicle;
a left measurement target (W), attached to a left wheel of the rear axle, having at least one marking (MW) and a right measurement target, attached to the opposite right wheel of the rear axle, having at least one marking;
two measurement cameras (K1, K2), which are situated above the vehicle and which are arranged and configured to record the driver assistance system calibration target (T1, T2) and record at least one marking (MW) of the left measurement target (W) and at least one marking of the right measurement target in a plurality of vehicle positions; and
an evaluation unit, which is configured
to determine, from the recordings of the measurement target (MW) in at least two vehicle positions, the direction of the geometric drive axis of the vehicle and the position thereof centrally in relation to the axis with respect to the two measurement cameras (K1, K2) and the inclination of a contact area in relation to the measurement cameras (K2, K2);
to determine, from the recordings of the driver assistance system calibration target (T1, T2) by the two measurement cameras (K1, K2), the position of the driver assistance system calibration target (T1, T2) in relation to the two measurement cameras (K1, K2);
to determine, therefrom, the position and alignment of the driver assistance system calibration target (T1, T2) in relation to the geometric drive axis of the vehicle;
to determine, from the recording of the driver assistance system calibration target (T1, T2) by the driver assistance system camera (KFAS), the position of the driver assistance system calibration target (T1, T2) in relation to the driver assistance system camera (KFAS); and
to determine, therefrom, the position and alignment of the driver assistance system camera (KFAS) in relation to the geometric drive axis of the vehicle.

6. Apparatus according to Claim 5, wherein the driver assistance system camera (KFAS) is a driver assistance system camera of a lane keeping assistance, a lane change warning, a lane departure warning, a thermal imaging camera/night vision or a parking aid.

7. Apparatus according to Claim 5 or 6, wherein the measurement targets (W) comprise a target element protruding outwardly in the transverse vehicle direction having at least one marking (MW) attached thereon, said at least one marking being embodied such that at least one marking (MW) is always in the field of view of the measurement cameras (K1, K2) when the measurement target (W) rotates.

8. Apparatus according to any one of Claims 5 to 7, wherein provision is additionally made of a reference target and/or an angle measuring device for the measurement cameras.

## Revendications

1. Procédé destiné à la détermination de la position et de l'orientation d'une caméra de système d'assistance à la conduite (KFAS) d'un véhicule par rapport au véhicule, comprenant les étapes successives consistant à :
acquérir au moins une marque (MW) d'une cible de mesure (W) placée sur la roue gauche de l'essieu arrière et au moins une marque d'une cible de mesure (W) placée sur la roue droite opposée de l'essieu arrière au moyen de deux caméras de mesure (K1, K2) qui se trouvent au-dessus du véhicule à au moins deux positions du véhicule ;
déterminer la direction de l'axe de conduite géométrique du véhicule et sa position au centre de l'essieu par rapport aux deux caméras de mesure (K1, K2), et déterminer une inclinaison d'une surface de contact par rapport aux caméras de mesure (K2, K2) ;
acquérir une cible d'étalonnage (T1, T2) du système d'aide à la conduite au moyen des deux caméras de mesure (K1, K2) ;
déterminer à partir de celle-ci la position de la cible d'étalonnage (T1, T2) du système d'aide à la conduite par rapport aux deux caméras de mesure (K1, K2) ;
déterminer la position et l'orientation de la cible d'étalonnage (T1, T2) du système d'aide à la conduite par rapport à l'axe de conduite géométrique du véhicule ;
acquérir la cible d'étalonnage (T1, T2) du système d'aide à la conduite au moyen de la caméra du système d'aide à la conduite (KFAS) ;
déterminer à partir de celle-ci la position de la caméra du système d'aide à la conduite (KFAS) par rapport à la cible d'étalonnage (T1, T2) du système d'aide à la conduite ; et
déterminer la position et l'orientation de la caméra du système d'assistance à la conduite (KFAS) par rapport à l'axe de conduite géométrique du véhicule.

2. Procédé selon la revendication 1, dans lequel les marques (MW) des cibles de mesure (W) présentes sur les roues sont acquises par les caméras de mesure (K1, K2) pendant un déplacement du véhicule, en particulier pendant le démarrage du véhicule.

3. Procédé selon l'une des revendications précédentes, dans lequel la cible d'étalonnage (T1, T2) du système d'aide à la conduite comprend un système de caractérisation connu.

4. Procédé selon l'une des revendications précédentes, dans lequel il est en outre prévu un dispositif d'affichage affichant la position réelle et la position nominale de la cible d'étalonnage (T1, T2) du système d'aide à la conduite pour faciliter le positionnement de la cible d'étalonnage (T1, T2) du système d'aide à la conduite à la position nominale.

5. Dispositif destiné à déterminer la position et l'orientation d'une caméra du système d'assistance à la conduite (KFAS) d'un véhicule par rapport au véhicule, comprenant les éléments suivantes :
une cible d'étalonnage (K1, K2) destinée à la caméra du système d'aide à la conduite (KFAS) et espacée du véhicule ;
une cible de mesure (W) gauche ayant au moins une marque (MW) placée sur une roue gauche de l'essieu arrière et une cible de mesure droite ayant au moins une marque placée sur la roue droite opposée de l'essieu arrière ;
deux caméras de mesure (K1, K2) qui se trouvent au-dessus du véhicule et sont disposées et conçues de manière à acquérir la cible d'étalonnage (T1, T2) du système d'aide à la conduite et à acquérir au moins une marque (MW) de la cible de mesure gauche (W) et au moins une marque de la cible de mesure droite à plusieurs positions du véhicule ;
et une unité d'évaluation qui est conçue pour déterminer, à partir des acquisitions des cibles de mesure (MW) à au moins deux positions du véhicule, la direction de l'axe de conduite géométrique du véhicule et sa position au milieu de l'essieu par rapport aux deux caméras de mesure (K1, K2) et l'inclinaison d'une surface de contact par rapport aux caméras de mesure (K2, K2) ;
déterminer la position de la cible d'étalonnage (T1, T2) du système d'aide à la conduite par rapport aux deux caméras de mesure (K1, K2) à partir des acquisitions de la cible d'étalonnage (T1, T2) du système d'aide à la conduite au moyen des deux caméras de mesure (K1, K2) ;
déterminer à partir de celle-ci la position et l'orientation de la cible d'étalonnage (T1, T2) du système d'aide à la conduite par rapport à l'axe de conduite géométrique du véhicule ;
déterminer la position de la cible d'étalonnage (T1, T2) du système d'aide à la conduite par rapport à la caméra du système d'aide à la conduite (KFAS) à partir de l'acquisition de la cible d'étalonnage (T1, T2) du système d'aide à la conduite au moyen de la caméra du système d'aide à la conduite (KFAS) ;
et pour déterminer à partir de celle-ci la position et l'orientation de la caméra du système d'aide à la conduite (KFAS) par rapport à l'axe de conduite géométrique du véhicule.

6. Dispositif selon la revendication 5, dans lequel la caméra du système d'aide à la conduite (KFAS) est une caméra de système d'aide à la conduite d'un assistant de maintien de voie, un système d'avertissement de changement de voie/lane change warning, un système d'avertissement de départ de voie/lane departure warning, une caméra d'imagerie thermique/night vision ou un système d'aide au stationnement.

7. Dispositif selon la revendication 5 ou 6, dans lequel les cibles de mesure (W) comprennent un élément de cible faisant saillie vers l'extérieur dans la direction transversale du véhicule et ayant au moins une marque (MW) qui est placée sur celui-ci, qui est/sont conçue(s) de manière à ce qu'au moins une marque (MW) se trouve toujours dans le champ de vision des caméras de mesure (K1, K2) lors d'une rotation de la cible de mesure (W).

8. Dispositif selon l'une des revendications 5 à 7, dans lequel il est en outre prévu une cible de référence supplémentaire et/ou un dispositif de mesure d'angle pour les caméras de mesure.
